# EUROPEAN PATENT APPLICATION

(11) **EP 1 068 959 A1**
(43) Date of publication of application: **17.01.2001**
(21) Application number: 99939179.0
(22) Date of filing: 10.03.1999
(51) Int. Cl.: B41M 5/00

(54) **WATER RESISTANCE IMPROVING AGENT FOR INKJET RECORDING PAPER AND INKJET RECORDING PAPER**

(30) Priority: 10.03.1998 JP 5853898
(71) Applicant: Nicca Chemical Co., Ltd., Fukui-shi, Fukui 910-8670 (JP)
(72) Inventor: YAMADA, Toshio, Fukui-shi, Fukui 910-8670 (JP); TAKAHASHI, Toshiaki, Fukui-shi, Fukui 910-8670 (JP); KINOSHITA, Hirotaka, Fukui-shi, Fukui 910-8670 (JP); GENSHO, Toshio, Fukui-shi, Fukui 910-8670 (JP)
(74) Representative: Gille Hrabal Struck Neidlein Prop Roos
(86) International application number: JP9901139
(87) International publication number: WO9946130

(57) **Abstract**

An agent for improving water resistance of ink-jet recording paper which comprises a cationic polyurethane resin obtained by neutralizing amine structures or quaternizing a tertiary amine structure in molecules of a polyurethane which is obtained by reacting (A) an organic isocyanate compound having 2 or more isocyanate groups with (B) a tertiary amine compound having 2 to 10 groups each selected from hydroxyl group and amino group in amounts such that a ratio by equivalent of the isocyanate group to a total of the hydroxyl group and the amino group is 0.5 to 3.0 and an ink-jet recording paper coated with the agent. By coating ink-jet recording paper of regular paper or coated paper with the agent for improving water resistance of ink-jet recording paper of the present invention, water resistance of images and characters recorded on the recording paper is improved and blotting with ink is suppressed.

## Description

### TECHNICAL FIELD

The present invention relates to an agent for improving water resistance of ink-jet recording paper which improves water resistance of images and characters recorded on recording paper and suppresses blotting with ink. The recording paper is prepared by mixing the agent with pulp fibers as a slurry in paper making, by impregnating regular paper or coated paper with the agent, or by coating those papers with the agent.

### BACKGROUND ART

In a printer of the ink-jet printing type, prints are made by injecting ink from nozzles as a jet. The ink-jet printing has advantages in that printing can be conducted quietly, no development or fixing is necessary, a simple recording apparatus can be constructed, regular paper or coated paper can be used. The ink-jet color printing is easily conducted and images and characters can be recorded with flexibility. Therefore, the ink-jet printing has achieved rapid growth and further growth in the future is attracting attention.

However, when regular paper is used as the ink-jet recording paper, a problem arises in that blotting with dyes takes place when water is attached to the recording paper after printing. Therefore, in general, an agent for improving water resistance is used. As the agent for improving water resistance, for example, cationic resins such as dicyandiamide condensates, polyamines and polyethyleneimines are proposed. However, these agents for improving water resistance have problems in that the water resistance is insufficient, color changes, white portions of paper are yellowed and blotting with ink takes place. An agent for improving water resistance of ink-jet recording paper and an ink-jet recording paper which exhibit excellent water resistance and do not cause change in color, yellowing of white portions or blotting with ink are desired.

The present invention has an object of providing an agent for improving water resistance of ink-jet recording paper and an ink-jet recording paper which exhibits improved water resistance of images and characters recorded on the recording paper and suppresses blotting with ink.

### DISCLOSURE OF THE INVENTION

As the result of extensive studies to overcome the above problems, it was found that a recording paper coated with a cationic polyurethane resin obtained by neutralizing amine structures or quaternizing a tertiary amine in molecules of a polyurethane exhibits excellent water resistance of images and characters recorded by an ink-jet printer and causes no blotting with ink. The polyurethane is obtained by reacting (A) an organic isocyanate compound having 2 or more isocyanate groups with (B) a tertiary amine compound having 2 to 10 groups each selected from hydroxyl group and amino group in amounts such that a ratio by equivalent of the isocyanate group to a total of the hydroxyl group and the amino group is 0.5 to 3.0. The present invention has been completed based on this knowledge.

The present invention provides:
(1) An agent for improving water resistance of ink-jet recording paper which comprises a cationic polyurethane resin obtained by neutralizing amine structures or quaternizing a tertiary amine structure in molecules of a polyurethane which is obtained by reacting component (A) (an organic isocyanate compound having 2 or more isocyanate groups) with component (B) (a tertiary amine compound having 2 to 10 groups each selected from hydroxyl group and amino group) in amounts such that a ratio by equivalent of the isocyanate group to a total of the hydroxyl group and the amino group is 0.5 to 3.0;
(2) An agent for improving water resistance of ink-jet recording paper which comprises a cationic polyurethane resin obtained by neutralizing amine or quaternizing a tertiary amine structure in molecules of a polyurethane which is obtained by reacting component (A) (an organic isocyanate compound having 2 or more isocyanate groups) with component (B) (a tertiary amine compound having 2 to 10 groups each selected from hydroxyl group and amino group) in amounts such that a ratio by equivalent of the isocyanate group to a total of the hydroxyl group and the amino group exceeds 1.0 and is smaller than 3.0, and then reacting component (C) (an amine compound having 1 to 4 groups each selected from hydroxyl group and amino group) with isocyanate group in molecules of a polyurethane obtained by reacting component (A) with component (B);
(3) An agent for improving water resistance of ink-jet recording paper described in any of (1) and (2), wherein the cationic polyurethane resin is obtained by neutralizing amine or quaternizing a tertiary amine structure in molecules of the polyurethane, and then converting unreacted isocyanate group into amino group by reaction with water; and
(4) An ink-jet recording paper which is coated with an agent for improving water resistance of ink-jet recording paper described in any of (1) to (3).

### THE MOST PREFERRED EMBODIMENT TO CARRY OUT THE INVENTION

The first embodiment of the agent for improving water resistance of ink-jet recording paper of the present invention comprises a cationic polyurethane resin obtained by neutralizing amine or quaternizing a tertiary amine structure in molecules of a polyurethane. The polyurethane is obtained by reacting component (A) (an organic isocyanate compound having 2 or more isocyanate groups) with component (B) (a tertiary amine compound having 2 to 10 groups each selected from hydroxyl group and amino group) in amounts such that a ratio by equivalent of the isocyanate group to a total of the hydroxyl group and the amino group is 0.5 to 3.0.

The organic isocyanate compound having 2 or more isocyanate groups which is used as component (A) in the present invention is not particularly limited. Examples of the organic isocyanate compound having 2 or more isocyanate groups include 2,4-tolylene diisocyanate, 2,6-tolylene diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3, 3'-dimethyl-4,4'-biphenylene diisocyanate, 3,3'-dichloro-4,4'-biphenylene diisocyanate, 1,5-naphthalene diisocyanate, 1,5-tetrahydxonaphthalene diisocyanate, tetramethylene diisocyanate, hexamethylene diisocyanate, dodecamethylene diisocyanate, trimethylhexamethylene diisocyanate, 1,3-cyclohexylene diisocyanate, 1,4-cyclohexylene diisocyanate, xylylene diisocyanate, tetramethylxylylene diisocyanate, hydrogenated xylylene diisocyanate, lysine diisocyanate, isophorone diisocyanate and 4,4'-dicyclohexylmethane diisocyanate. The organic isocyanate compounds may be used singly or in combination of two or more. Among these organic isocyanate compounds, hexamethylene diisocyanate is preferably used.

Examples of the tertiary amine compound having 2 to 10 groups each selected from hydroxyl group and amino group which is used as component (B) in the present invention include compounds represented by general formula [1]:

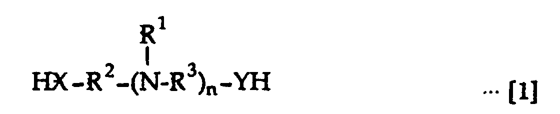

In general formula [1], X and Y represent -O- or -NH-, R¹ represents an alkyl group having 1 to 4 carbon atoms, a hydroxyalkyl group having 1 to 4 carbon atoms or an aminoalkyl group, R² and R³ represent an alkylene group having 1 to 4 carbon atoms and n represents a number of 1 to 8. X and Y may represent the same group or different groups. R² and R³ may represent the same, group or different groups. When n represents a number of 2 to 8, a plurality of R¹, R² and R³ may represent the same group or different groups.

Examples of the diol compound represented by general formula [1] in which X and Y represent -O- and R¹ represents an alkyl group include N,N-di(hydroxymethyl)methylamine, N,N-di(hydroxymethyl)ethylamine, N,N-di(hydroxymethyl)butylamine, N,N-di(2-hydroxyethyl)methylamine, N,N-di(2-hydroxyethyl)ethylamine, N,N-di(2-hydroxyethyl)butylamine, N,N-di(2-hydroxypropyl)methylamine, N,N-di(2-hydroxypropyl)ethylamine, N,N-di(2-hydroxypropyl)butylamine, N,N-di(3-hydroxypropyl)methylamine, N,N-di(3-hydroxypropyl)ethylamine, N,N-di(3-hydroxypropyl)butylamine, N,N'-dimethyl-N,N'-dihydroxyethylethylenediamine, N,N'-diethyl-N,N'-dihydroxyethylethylenediamine, N,N'-dibutylN,N'-dihydroxyethylethylenediamine, N,N'-dimethyl-N,N'-dihydroxyethylpropylenediamine, N,N'-diethyl-N,N'-dihydroxyethylpropylenediamine, N,N'-dibutyl-N,N'-dihydroxyethylpropylenediamine, N,N',N''-trimethylN,N''-dihydroxyethyldiethylenetriamine, N,N',N''-triethyl-N,N''-dihydroxyethyldiethylenetriamine, N,N',N''-tributyl-N,N''-dihydroxyethyldiethylenetriamine, N,N',N''-trimethyl-N,N''-dihydroxyethyldipropylenetriamine, N,N',N''-triethyl-N,N''-dihydroxyethyldipropylenetriamine, N,N',N''-tributyl-N,N''-dihydroxyethyldipropylenetriamine, 3,6,9,12-tetramethyl-3,6,9,12-tetraazatetradecane-1,14-diol, 3,6,9,12-tetraethyl3,6,9,12-tetraazatetradecane-1,14-diol, 3,6,9,12-tetrabutyl-3,6,9,12-tetraazatetradecane-1,14-diol, 3,6,9,12,15-pentamethyl-3,6,9,12,15-pentaazaheptadecane-1,17-diol, 3,6,9,12,15-pentaethyl-3,6,9,12,15-pentaazaheptadecane-1,17-diol and 3,6,9,12,15-pentabutyl-3,6,9,12,15-pentaazaheptadecane-1,17-diol.

Examples of the diamine compound represented by general formula [1] in which X and Y represent -NH- and R¹ represents an alkyl group include methylimino-bisethylamine, ethylimino-bisethylamine, butylimino-bisethylamine, methylimino-bispropylamine and butyliminobispropylamine.

Examples of the triol compound represented by general formula [1) in which X and Y represent -O-, R¹ represents a hydroxyalkyl group and n represents 1 include triethanolamine and tripropanolamine.

Examples of the triamine compound represented by general formula [1] in which X and Y represent -NH-, R¹ represents an aminoalkyl group and n represents 1 include tri(2-aminoethyl)amine and tri(2-aminopropyl)amine.

Further examples of the tertiary amine compound having 2 to 10 groups each selected from hydroxyl group and amino group include adducts of ethylene oxide, propylene oxide, butylene oxide, styrene oxide, epichlorohydrin and tetrahydrofuran to compounds having amine group such as ethylenediamine and propylenediamine.

In the present invention, the tertiary amine compounds having 2 to 10 groups each selected from hydroxyl group and amino group which is used as component (B) may be used singly or in combination of two or more. In the present invention, as the tertiary amine used as component (B), N,N-di(2-hydroxyethyl)methylamine, nitrilo-2,2',2''-trisethanol, adducts of propylene oxide to ethylenediamine, methyliminobispropylamine and tri(2-aminoethyl)amine are preferably used.

In the first embodiment of the agent for improving water resistance of ink-jet recording paper of the present invention, a polyurethane is synthesized by reacting component (A) with component (B) in amounts such that the ratio by equivalent of the isocyanate group to the total of the hydroxyl group and the amino group is 0.5 to 3.0 and preferably 0.8 to 1.5. When the ratio by equivalent of the isocyanate group to the total of the hydroxyl group and the amino group is smaller than 0.5, there is the possibility that the effect of improving water resistance is not sufficiently exhibited. When the ratio by equivalent of the isocyanate group to the total of the hydroxyl group and the amino group exceeds 3.0, the amount of the isocyanate group which does not take part in the reaction increases and there is the possibility that white powder compounds insoluble in water are formed.

In the present embodiment, primary, secondary and tertiary amine structures in the molecules of the obtained polyurethane are neutralized with an acid or a tertiary amine structure is quaternized with a quaternizing agent. The acid used for the neutralization is not particularly limited. Examples of the acid include organic acids such as formic acid, acetic acid, propionic acid, butyric acid, lactic acid, malic acid and citric acid; and inorganic acids such as hydrochloric acid, sulfuric acid, nitric acid, phosphoric acid and hydrofluoric acid. The acids may be used singly or in combination of two or more. Among these acid, acetic acid is preferably used. In the present embodiment, the entire amount or a portion of the amine structures in the molecules of the polyurethane may be neutralized. The quaternizing agent used for the quaternization is not particularly limited. Examples of the quaternizing agent include oxirane compounds such as ethylene oxide, propylene oxide, butylene oxide, styrene oxide and epichlorohydrin; ester compounds such as dimethyl sulfate, diethyl sulfate and methyl p-toluenesulfonate; and halogen compounds such as methyl chloride, ethyl chloride, benzyl chloride, methyl bromide and ethyl bromide. The quaternizing agent may be used singly or in combination of two or more. Among these quaternizing agents, diethyl sulfate is preferably used. In the present embodiment, the entire amount or a portion of the tertiary amine structure in the molecules of the polyurethane may be quaternized.

The second embodiment of the agent for improving water resistance of ink-jet recording paper of the present invention comprises a cationic polyurethane resin obtained by neutralizing amine structures or quaternizing a tertiary amine structure in molecules of a polyurethane which is obtained by reacting component (A) with component (B) in amounts such that a ratio by equivalent of the isocyanate group to a total of the hydxoxyl group and the amino group exceeds 1.0 and is smaller than 3.0, and then reacting component (C) with isocyanate group in molecules of a polyurethane obtained by reacting component (A) with component (B).

In the present embodiment, component (A) and component (B) which are the same as those described in the first embodiment can be used each as the organic isocyanate compound having 2 or more isocyanate groups and the tertiary amine compound having 2 to 10 groups each selected from hydroxyl group and amino group. The polyurethane is synthesized by reacting component (A) with component (B) in amounts such that the ratio by equivalent of the isocyanate group to the total of the hydroxyl group and the amino group exceeds 1.0 and is smaller than 3.0 and preferably in amounts such that the ratio by equivalent is in the range of 1.1 to 1.5. When the ratio by equivalent of the isocyanate group to the total of the hydroxyl group and the amino group is smaller than 1.0, there is the possibility that the isocyanate group is completely consumed and the reaction of the amine compound having 1 to 4 groups each selected from hydroxyl group and amine group of component (C) with the isocyanate group in the molecules of a polyurethane obtained by reacting component (A) with component (B) becomes impossible. When the ratio by equivalent of the isocyanate group to the total of the hydroxyl group and the amino group exceeds 3.0, the amount of the isocyanate group which does not take part in the reaction increases and there is the possibility that white powder compounds insoluble in water are formed.

In the present embodiment, component (C) is reacted with isocyanate group in molecules of a polyurethane obtained by reacting component (A) with component (B). The amine compound having 1 to 4 groups each selected from hydroxyl group and amine group which is used as component (C) is not particularly limited. Examples of the amine compound include amines having 2 or more amino groups such as 1,2-ethanediamine, 1,2-propanediamine, 1,3-propanediamine, diethylenetriamine, triethylenetetramine, tetraethylenepentamine, iminobispropylamine and p-phenylenediamine; tertiary amine compounds having hydroxyl group such as N,N-dimethylaminoethanol, N,N-dimethyl-3-aminopropanol, N,N-diethylaminoethanol, N-methyl-3-hydroxypiperidine, N-ethyl-3-hydroxypiperidine, N-methyl-4-hydroxypiperidine and N-methyl-3-piperidinemethanol; and tertiary amine compounds having amino group such as N,N-dimethylaminoethylamine, N,N-diethylaminoethylamine, N,N-diethyl-3-aminopropylamine, N,N-dimethylaminoethoxypropylamine, N-aminomethylpiperidine, N-aminoethylpiperidine and N-aminopropylpiperidine. The amine compound may be used singly or in combination of two or more. Among these amine compounds, N,N-dimethylaminoethanol, N,N-di(2-hydroxyethyl)methylamine, nitrilo-2,2',2''-trisethanol, adducts of propylene oxide to ethylenediamine, methyliminobispropylamine, tri(2-aminoethyl)amine and diethylenetriamine are preferably used.

In the present embodiment, primary, secondary and tertiary amine structures in the molecules of the polyurethane which is obtained by reacting component (A) with component (B) and then reacting component (C) with the obtained reaction product are neutralized with an acid or a tertiary amine structure in the molecules of the above polyurethane is quaternized with a quaternizing agent. The acid used for the neutralization is not particularly limited. Examples of the acid include organic acids such as formic acid, acetic acid, propionic acid, butyric acid, lactic acid, malic acid and citric acid; and inorganic acids such as hydrochloric acid, sulfuric acid, nitric acid, phosphoric acid and hydrofluoric acid. The acids may be used singly or in combination of two or more. Among these acid, acetic acid is preferably used. The entire amount or a portion of the amine structures in the molecules of the polyurethane may be neutralized. The quaternizing agent used for the quaternization is not particularly limited. Examples of the quaternizing agent include oxirane compounds such as ethylene oxide, propylene oxide, butylene oxide, styrene oxide and epichlorohydrin; ester compounds such as dimethyl sulfate, diethyl sulfate and methyl para-toluenesulfonate; and halogen compounds such as methyl chloride ethyl chloride, benzyl chloride, methyl bromide and ethyl bromide. The quaternizing agent may be used singly or in combination of two or more. Among these quaternizing agents, diethyl sulfate is preferably used. The entire amount or a portion of the tertiary amine structure in the molecules of the polyurethane may be quaternized.

In the present invention, a tin catalyst or an amine catalyst may be used as the reaction accelerator in the reaction of component (A) with component (B). The tin catalyst is not particularly limited. Examples of the tin catalyst include dibutyltin dilaurate and stannous octoate. The amine catalyst is not particularly limited. Examples of the amine catalyst include triethylenediamine, triethylamine, tetramethylpropanediamine, tetramethylbutanediamine and N-methylmorpholine.

In the present invention, the reaction of component (A) with component (B) may be conducted in the absence of solvents. The reaction may also be conducted in the presence of an organic solvent which does not directly take part in the reaction of isocyanate group to control the reaction in the reaction system or to control the base viscosity. Examples of the organic solvent which does not directly take part in the reaction include ketones such as acetone, methyl ethyl ketone, methyl isobutyl ketone and diisobutyl ketone; esters of organic acids such as methyl formate, ethyl formate, propyl formate, butyl formate, methyl acetate, ethyl acetate, propyl acetate, butyl acetate, methyl propionate, ethyl propionate and butyl propionate; and compounds containing nitrogen such as N,N-dimethylformamide and N-methylpyrrolidone.

In the present invention, when unreacted isocyanate group remains in the molecules of the polyurethane in which the amine structures have been neutralized or the tertiary amine structure has been quaternized, it is preferable that the residual isocyanate group is converted into amino group by reaction with water. The condition of the reaction of the residual isocyanate group with water is not particularly limited. For example, the residual isocyanate group can be decomposed and converted into amino group when the polyurethane having the residual isocyanate group is dissolved or dispersed in an excess amount of water and the reaction is allowed to proceed at a temperature between the room temperature to 60°C and preferably 30 to 50°C for 0.5 to 50 hours and preferably 1 to 3 hours. By converting isocyanate group into amino group, stability of the agent for improving water resistance of ink-jet recording paper can be improved.

The form of the agent for improving water resistance of ink-jet recording paper of the present invention is not particularly limited. The cationic polyurethane resin, in which the amine structures have been neutralized or the tertiary amine structure has been quaternized and the unreacted isocyanate group has been decomposed by the reaction with water, may be dissolved or suspended in an aqueous medium. The aqueous medium is not particularly limited. For example, a medium prepared by adding a polar organic solvent to water can be used. Examples of the polar organic solvent added to water include alcohols such as methanol, ethanol, propanol, isopropanol, n-butanol, sec-butanol, t-butanol, pentanol, hexanol, heptanol, octanol, nonanol, decanol, undecanol and dodecanol; phenols such as phenol and cresol; glycol ethers such as 3-methyl-3-methoxybutanol, 3-methyl-3-methoxybutyl acetate, ethylene glycol monomethyl ether, ethylene glycol monoethyl ether, ethylene glycol monobutyl ether, ethylene glycol ethyl ether acetate, diethylene glycol monomethyl ether, diethylene glycol monoethyl ether, diethylene glycol monobutyl ether, diethylene glycol monohexyl ether, diethylene glycol dibutyl ether, dipropylene glycol monoethyl ether, dipropylene glycol monopropyl ether, dipropylene glycol monobutyl ether and tripropylene glycol monomethyl ether; and glycols such as ethylene glycol, propylene glycol, 1,3-butanediol, hexylene glycol, diethylene glycol and dipropylene glycol. Stability of the agent for improving water resistance of ink-jet recording paper is improved due to the polar organic solvent contained in the aqueous medium.

To the agent for improving water resistance of ink-jet recording paper of the present invention, conventional binders, inorganic pigments and organic pigments can be added, where necessary. Examples of the binder include oxidized starch and polyvinyl alcohol. Examples of the inorganic pigment include calcium carbonate, kaolin (clay), talc, calcium sulfate, barium sulfate, titanium oxide, zinc oxide, zinc sulfate, zinc carbonate, satin white, aluminum silicate, diatomaceous earth, calcium silicate, synthetic silica, aluminum hydroxide, alumina and lithopone. Examples of the organic pigment include styrenic plastics, acrylic plastics and urea resins.

The process for application of the agent for improving water resistance of ink-jet recording paper of the present invention is not particularly limited. For example, the agent for improving water resistance of ink-jet recording paper can be added to pulp which has been treated by refining in a mixing chest in combination with fillers, chemicals and dyes in preparation of paper materials and the obtained mixture can be used for paper making. The pulp fiber is mainly composed of conventional wood pulp and may further contain fiber materials such as synthetic pulp, synthetic fiber and glass fiber. As another process, a bath for treating paper containing the agent for improving water resistance of ink-jet recording paper of the present invention may be prepared, regular paper or coated paper may be impregnated with the bath, the bath liquid for impregnation in an excess amount and attached to both sides of the paper may be removed by a size press or the like and the impregnated paper thus obtained may be dried. As still another process, regular paper or coated paper may be coated with the agent for improving water resistance of ink-jet recording paper of the present invention. Among these processes, the process in which regular paper or coated paper is coated with the agent for improving water resistance of ink-jet recording paper is preferable because control of the process is easier, the process can be used for producing many types of products in small quantities and the cationic polyurethane resin can be effectively utilized due to the distribution of the resin on the surface layer alone. When the agent for improving water resistance of ink-jet recording paper of the present invention is used by the coating, it is preferable that the agent for improving water resistance of ink-jet recording paper is used in an amount such that the amount of the cationic polyurethane resin is 0.1 to 10.0 g/m² and more preferably 0.2 to 5.0 g/m². The process for coating a recording paper with the agent for improving water resistance of ink-jet recording paper of the present invention is not particularly limited. For example, regular paper or coated paper may be coated with the agent by an air doctor coater, a roll coater, a blade coater, a bar coater, a brush coater, a ROD coater or a gravure coater and the coated paper may be dried.

When the agent for improving water resistance of ink-jet recording paper of the present invention is used, mordants for dying, defoaming agents, dispersants, thickening agents, coloring agents, antistatic agents, preservatives, water-soluble resins and adhesives may be used in combination. Examples of the mordants for dying include condensates of dicyandiamide, polyamines and polyethyleneimines. Examples of the water-soluble resin and the adhesive include oxidized starch, etherified starch, cellulose derivatives such as carboxymethylcellulose and hydroxyethylcellulose, casein, gelatin, soy bean protein, polyvinyl alcohol and derivatives thereof, maleic anhydride resins, latices of conjugated diene polymers such as styrene-butadiene copolymers and methyl methacrylate-butadiene copolymers, latices of acrylic polymers such as polymers and copolymers of acrylic esters and methacrylic esters, latices of vinyl polymers such as ethylene-vinyl acetate copolymers and thermoplastic resins such as polymethyl methacrylate, polyurethane resins, unsaturated polyester resins, vinyl chloride-vinyl acetate copolymers, polyvinyl butyral and alkyd resins. The regular paper means acidic paper or neutral paper which are generally used. The coating paper means paper coated with materials such as binders, inorganic pigments and organic pigments.

When records are made with a water base ink on an ink-jet recording paper which has been treated with the agent for improving water resistance of ink-jet recording paper of the present invention, it is considered that elution of the dye can be prevented because the dye in the water base ink and the cationic polyurethane resin in the ink-jet recording paper are bonded to each other and water resistance is improved. It is preferable that the water base ink used for the recording contains an anionic direct dye or an acid dye in combination with wetting agents, agents for dissolving the dye and preservatives.

Examples of the anionic direct dye used for the water base ink include C. I. Direct Blacks 2, 4, 9, 11, 14, 17, 19, 22, 27, 32, 36, 38, 41, 48, 49, 51, 56, 62, 71, 74, 75, 77, 78, 80, 105, 106, 107, 108, 112, 113, 117, 132, 146, 154 and 194; C. I. Direct Yellows 1, 2, 4, 8, 11, 12, 24, 25, 26, 27, 28, 33, 34, 39, 41, 42, 44, 48, 50, 51, 58, 72, 85, 86, 87, 88, 98, 100 and 110; C. I. Direct Oranges 3, 8, 10, 26, 29, 39, 41, 49, 51 and 102; C. I. Direct Reds 1, 2, 4, 8, 9, 11, 13, 17, 18, 20, 23, 24, 28, 31, 33, 37, 39, 44, 46, 47, 48, 51, 59, 62, 63, 73, 75, 77, 80, 81, 83, 84, 85, 90, 94, 99, 101, 108, 110, 145, 189, 197, 220, 224, 225, 226, 227 and 230; C. I. Direct Violets 1, 7, 9, 12, 35, 48, 51, 90 and 94, C. I. Direct Blues 1, 2, 6, 8, 15, 22, 25, 34, 69, 70, 71, 72, 75, 76, 78, 80, 81, 82, 83, 86, 90, 98, 106, 108, 110, 120, 123, 158, 163, 165, 192, 193, 194, 195, 196, 199, 200, 201, 202, 203, 207, 218, 236, 237, 239, 246 and 258; C. I. Direct Greens 1, 6, 8, 28, 33, 37, 63 and 64; and C. I. Direct Browns 1, 2, 6, 25, 27, 44, 58, 95, 100, 101, 106, 112, 173, 194, 195, 209, 210 and 211.

Examples of the acid dye include C. I. Acid Blacks 1, 2, 7, 15, 17, 24, 26, 28, 31, 41, 48, 52, 60, 63, 94, 107, 109, 112, 118, 119, 121, 122, 131, 155 and 156; C. I. Acid Yellows 1, 3, 4, 7, 11, 12, 13, 14, 17, 18, 19, 23, 25, 29, 34, 36, 38, 40, 41, 42, 44, 49, 53, 55, 59, 61, 71, 72, 76, 78, 99, 111, 114, 116, 122, 135, 161 and 172; C. I. Acid Oranges 7, 8, 10, 33, 56 and 64; C. I. Acid Reds 1, 4, 6, 8, 13, 14, 15, 18, 19, 21, 26, 27, 30, 32, 34, 35, 37,40, 42, 51, 52, 54, 57, 80, 82, 83, 85, 87, 88, 89, 92, 94, 97, 106, 108, 110, 110, 115, 119, 129, 131, 133, 134, 135, 154, 155, 172, 176, 180, 184, 186, 187, 249, 254, 256, 317 and 318; C. I. Acid Violets 7, 11, 15, 34, 35, 41, 43, 49 and 75; C. I. Acid Blues 1, 7, 9, 22, 23, 25, 27, 29, 40, 41, 43, 45, 49, 51, 53, 55, 56, 59, 62, 78, 80, 81, 83, 90, 92, 93, 102, 104, 111, 113, 117, 120, 124, 126, 145, 167, 171, 175, 183, 229, 234 and 236; C. I. Acid Greens 3, 12, 19, 27 and 41; and C. I. Acid Browns 4 and 14.

### EXAMPLES

The present invention will be described more specifically with reference to examples in the following. However, the present invention is not limited to the examples.

In Examples and Comparative Examples, agents for improving water resistance of ink-jet recording paper were evaluated in accordance with the following methods.

### (1) Preparation of an ink-jet recording paper

An agent for improving water resistance of ink-jet recording paper was diluted with water and an aqueous solution containing 2.6% by weight of non-volatile components was prepared. Printing paper having a unit weight of 64 g/m² in accordance with Japanese Industrial Standard P 3101 was coated with the prepared solution in an amount of 19.2 g/m² using a bar coater and dried and an ink-jet recording paper coated with 0.5 g/m² of a cationic polyurethane resin was obtained.

### (2) Evaluation of water resistance

Solid prints in single colors of black, cyan, magenta and yellow were formed on a ink-jet recording paper using an ink-jet printer [manufactured by EPSON Co., Ltd.; MJ-700V2C]. After being left standing for one hour, the recording paper having the prints was dipped into flowing water for 5 minutes. Change in the printed portions was visually observed and the water resistance was evaluated in accordance with the following criteria:
- good:: no flowing with water or blotting in printed portions
- fair:: some blotting in printed portions
- poor:: apparent flowing with water and blotting in printed portions

### (3) Evaluation of the property to prevent blotting with ink

Dots in a single color of black were printed on a ink-jet recording paper using an ink-jet printer [manufactured by EPSON Co., Ltd., MJ-700V2C]. The dots were visually observed using a loupe of a magnification of 50 times and the property to prevent blotting with ink was evaluated in accordance with the following criteria:
- good:: no blotting
- fair:: some blotting
- poor:: apparent blotting

### Example 1

Into a four-necked flask purged with nitrogen, 20 parts by weight of N,N-dimethylformamide and 84 parts by weight of hexamethylene diisocyanate were placed. The mixture was cooled to 30°C or lower and 45 parts by weight of N,N-di(2-hydroxyethyl)methylamine was added. The reaction was allowed to proceed in the resultant mixture at 70°C for 1 hour. After the reaction was completed and the reaction mixture was cooled, 58 parts by weight of diethyl sulfate was added dropwise at 40°C over 1 hour. After the addition was completed, the reaction was allowed to proceed at 80°C for 3 hours. After the reaction mixture was cooled, 707.1 parts by weight of water was added and the unreacted isocyanate was reacted with water at 40°C for 2 hours. Thus, an aqueous solution of an agent for improving water resistance of ink-jet recording paper containing 20% by weight of a cationic polyurethane resin was obtained.

An ink-jet recording paper was prepared using the agent for improving water resistance of ink-jet recording paper prepared above and the water resistance and the property to prevent blotting with ink of the paper were evaluated. No flowing with water or blotting was found in the portions printed in single colors of black, magenta and yellow. Some blotting was found in the portions printed in cyan. No blotting was found in the portion of dots printed in a single color of black.

### Example 2

An aqueous solution of an agent for improving water resistance of ink-jet recording paper containing 20% by weight of a cationic polyurethane resin was obtained in accordance with the same procedures as those conducted in Example 1 except that 37 parts by weight of triethanolamine was added in place of 45 parts by weight of N-methyldiethanolamine and 39 parts by weight of diethyl sulfate and 598.1 parts by weight of water were added.

An ink-jet recording paper was prepared using the agent for improving water resistance of ink-jet recording paper prepared above and the water resistance and the property to prevent blotting with ink of the paper were evaluated. No flowing with water or blotting was found in the portions printed in black and magenta. Some blotting was found in the portions printed in cyan and yellow. No blotting was found in the portion of dots printed in a single color of black.

### Example 3

An aqueous solution of an agent for improving water resistance of ink-jet recording paper containing 20% by weight of a cationic polyurethane resin was obtained in accordance with the same procedures as those conducted in Example 1 except that 85.5 parts by weight of an adduct of propylene oxide to ethylenediamine (the average molecular weight: 450) was added in place of 45 parts by weight of N-methyldiethanolamine and 28.9 parts by weight of diethyl sulfate and 753.6 parts by weight of water were added.

An ink-jet recording paper was prepared using the agent for improving water resistance of ink-jet recording paper prepared above and the water resistance and the property to prevent blotting with ink of the paper were evaluated. No flowing with water or blotting was found in the portions printed in single colors of black, cyan, magenta and yellow. Some blotting was found in the portion of dots printed in a single color of black.

### Example 4

An aqueous solution of an agent for improving water resistance of ink-jet recording paper containing 20% by weight of a cationic polyurethane resin was obtained in accordance with the same procedures as those conducted in Example 1 except that 27.5 parts by weight of methyliminobispropylamine and 22.5 parts by weight of N-methyldiethanolamine were added in place of 45 parts by weight of N-methyldiethanolamine and 736.8 parts by weight of water was added.

An ink-jet recording paper was prepared using the agent for improving water resistance of ink-jet recording paper prepared above and the water resistance and the property to prevent blotting with ink of the paper were evaluated. No flowing with water or blotting was found in the portions printed in single colors of black, magenta and yellow. Some blotting was found in the portion printed in cyan. No blotting was found in the portion of dots printed in a single color of black.

### Example 5

An aqueous solution of an agent for improving water resistance of ink-jet recording paper containing 20% by weight of a cationic polyurethane resin was obtained in accordance with the same procedures as those conducted in Example 1 except that 18.2 parts by weight of tri(2-aminoethyl)amine and 22.5 parts by weight of N-methyldiethanolamine were added in plate of 45 parts by weight of N-methyldiethanolamine and 48.5 parts by weight of diethyl sulfate and 661.4 parts by weight of water were added.

An ink-jet recording paper was prepared using the agent for improving water resistance of ink-jet recording paper prepared above and the water resistance and the property to prevent blotting with ink of the paper were evaluated. No flowing with water or blotting was found in the portions printed in single colors of black, cyan and magenta. Some blotting was found in the portion printed in yellow. No blotting was found in the portion of dots printed in a single color of black.

### Example 6

An aqueous solution of an agent for improving water resistance of ink-jet recording paper containing 25% by weight of a cationic polyurethane resin was obtained in accordance with the same procedures as those conducted in Example 1 except that 59 parts by weight of N-methyldiethanolamine, 76 parts by weight of diethyl sulfate and 637 parts by weight of water were used.

An ink-jet recording paper was prepared using the agent for improving water resistance of ink-jet recording paper prepared above and the water resistance and the property to prevent blotting with ink of the paper were evaluated. No flowing with water or blotting was found in the portions printed in single colors of black and magenta. Some blotting was found in the portions printed in cyan and yellow. No blotting was found in the portion of dots printed in a single color of black.

### Example 7

Into a four-necked flask purged with nitrogen, 28 parts by weight of N,N-dimethylformamide and 117.6 parts by weight of hexamethylene diisocyanate were placed. The mixture was cooled to 30°C or lower and 63 parts by weight of N-methyldiethanolamine was added. The reaction was allowed to proceed in the resultant mixture at 70°C for 1 hour. After the reaction was completed and the reaction mixture was cooled, the reaction mixture was neutralized by adding 31.8 parts by weight of acetic acid. Then, 633.3 parts by weight of water was added and the unreacted isocyanate was reacted with water at 40°C for 2 hours. Thus, an aqueous solution of an agent for improving water resistance of ink-jet recording paper containing 20% by weight of a cationic polyurethane resin was obtained.

An ink-jet recording paper was prepared using the agent for improving water resistance of ink-jet recording paper prepared above and the water resistance and the property to prevent blotting with ink of the paper were evaluated. No flowing with water or blotting was found in the portions printed in single colors of black and magenta. Some blotting was found in the portions printed in cyan and yellow. Some blotting was found in the portion of dots printed in a single color of black.

### Example 8

An aqueous solution of an agent for improving water resistance of ink-jet recording paper containing 20% by weight of a cationic polyurethane resin was obtained in accordance with the same procedures as those conducted in Example 7 except that 131.6 parts by weight of xylylene diisocyanate was used in place of 117.6 parts by weight of hexamethylene diisocyanate and 689.3 parts by weight of water were added.

An ink-jet recording paper was prepared using the agent for improving water resistance of ink-jet recording paper prepared above and the water resistance and the property to prevent blotting with ink of the paper were evaluated. No flowing with water or blotting was found in the portions printed in single colors of black, magenta and yellow. Some blotting was found in the portion printed in cyan. Some blotting was found in the portion of dots printed in a single color of black.

### Example 9

Into a four-necked flask purged with nitrogen, 20 parts by weight of N,N-dimethylformamide and 84 parts by weight of hexamethylene diisocyanate were placed. The mixture was cooled to 30°C or lower and 77.4 parts by weight of N-methyldiethanolamine was added. The reaction was allowed to proceed in the resultant mixture at 70°C for 1 hour. After the reaction was completed and the reaction mixture was cooled, 100 parts by weight of diethyl sulfate was added dropwise at 40°C over 1 hour. After the addition was completed, the reaction was allowed to proceed at 80°C for 3 hours. After the reaction mixture was cooled, 589.9 parts by weight of water was added and an aqueous solution of an agent for improving water resistance of ink-jet recording paper containing 30% by weight of a cationic polyurethane resin was obtained.

An ink-jet recording paper was prepared using the agent for improving water resistance of ink-jet recording paper prepared above and the water resistance and the property to prevent blotting with ink of the paper were evaluated. No flowing with water or blotting was found in the portions printed in single colors of black and magenta. Some blotting was found in the portions printed in cyan and yellow. Some blotting was found in the portion of dots printed in a single color of black.

### Example 10

Into a four-necked flask purged with nitrogen, 20 parts by weight of N,N-dimethylformamide and 84 parts by weight of hexamethylene diisocyanate were placed. The mixture was cooled to 30°C or lower and 45 parts by weight of N-methyldiethanolnmine was added. After the reaction was allowed to proceed in the resultant mixture at 70°C for 1 hour, 21.4 parts by weight of 2-dimethylaminoethanol was added and the reaction was allowed to proceed at 70°C for 1 hour. After the reaction was completed and the reaction mixture was cooled, 95.2 parts by weight of diethyl sulfate was added dropwise at 40°C over 1 hour. After the addition was completed, the reaction was allowed to proceed at 80°C for 3 hours. After the reaction mixture was cooled, 716.8 parts by weight of water was added and an aqueous solution of an agent for improving water resistance of ink-jet recording paper containing 25% by weight of a cationic polyurethane resin was obtained.

An ink-jet recording paper was prepared using the agent for improving water resistance of ink-jet recording paper prepared above and the water resistance and the property to prevent blotting with ink of the paper were evaluated. No flowing with water or blotting was found in the portions printed in single colors of black, cyan, magenta and yellow. No blotting was found in the portion of dots printed in a single color of black.

### Example 11

An aqueous solution of an agent for improving water resistance of ink-jet recording paper containing 25% by weight of a cationic polyurethane resin was obtained in accordance with the same procedures as those conducted in Example 10 except that 28.6 parts by weight of N-dimethyldiethanolamine was added in place of 21.4 parts by weight of 2-dimethylaminoethanol and 58 parts by weight of diethyl sulfate and 626.8 parts by weight of water were added.

An ink-jet recording paper was prepared using the agent for improving water resistance of ink-jet recording paper prepared above and the water resistance and the property to prevent blotting with ink of the paper were evaluated. No flowing with water or blotting was found in the portions printed in single colors of black, cyan, magenta and yellow. No blotting was found in the portion of dots printed in a single color of black.

### Example 12

An aqueous solution of an agent for improving water resistance of ink-jet recording paper containing 20% by weight of a cationic polyurethane resin was obtained in accordance with the same procedures as those conducted in Example 10 except that 35.8 parts by weight of triethanolamine was added in place of 21.4 parts by weight of 2-dimethylaminoethanol and 58 parts by weight of diethyl sulfate and 648.4 parts by weight of water were added.

An ink-jet recording paper was prepared using the agent for improving water resistance of ink-jet recording paper prepared above and the water resistance and the property to prevent blotting with ink of the paper were evaluated. No flowing with water or blotting was found in the portions printed in single colors of black, cyan, magenta and yellow. No blotting was found in the portion of dots printed in a single color of black.

### Example 13

An aqueous solution of an agent for improving water resistance of ink-jet recording paper containing 30% by weight of a cationic polyurethane resin was obtained in accordance with the same procedures as those conducted in Example 10 except that 108 parts by weight of an adduct of propylene oxide to ethylenediamine (the average molecular weight: 450) was added in place of 21.4 parts by weight of 2-dimethylaminoethanol and 58.2 parts by weight of diethyl sulfate and 668.8 parts by weight of water were added.

An ink-jet recording paper was prepared using the agent for improving water resistance of ink-jet recording paper prepared above and the water resistance and the property to prevent blotting with ink of the paper were evaluated. No flowing with water or blotting was found in the portions printed in single colors of black, cyan, magenta and yellow. No blotting was found in the portion of dots printed in a single color of black.

### Example 14

An aqueous solution of an agent for improving water resistance of ink-jet recording paper containing 25% by weight of a cationic polyurethane resin was obtained in accordance with the same procedures as those conducted in Example 10 except that 21.1 parts by weight of 2-dimethylaminoethanol, 58 parts by weight of diethyl sulfate and 604.3 parts by weight of water were added.

An ink-jet recording paper was prepared using the agent for improving water resistance of ink-jet recording paper prepared above and the water resistance and the property to prevent blotting with ink of the paper were evaluated. No flowing with water or blotting was found in the portions printed in single colors of black, cyan, magenta and yellow. No blotting was found in the portion of dots printed in a single color of black.

### Example 15

Into a four-necked flask purged with nitrogen, 20 parts by weight of N,N-dimethylformamide and 84 parts by weight of hexamethylene diisocyanate were placed. The mixture was cooled to 30°C or lower and 45 parts by weight of N-methyldiethanolamine was added. The reaction was allowed to proceed in the resultant mixture at 70°C for 1 hour. To the obtained reaction mixture, an aqueous amine solution which was prepared in advance by partially neutralizing 27.1 parts by weight of methyliminobispropylamine with 14.4 parts by weight of a 99% by weight acetic acid was added and the reaction was allowed to proceed at 70°C for 2 hours. After the reaction was completed and the reaction mixture was cooled, 58 parts by weight of diethyl sulfate was added dropwise at 40°C over 1 hour. After the addition was completed, the reaction was allowed to proceed at 80°C for 3 hours. After the reaction mixture was cooled, 607.9 parts by weight of water was added and an aqueous solution of an agent for improving water resistance of ink-jet recording paper containing 25% by weight of a cationic polyurethane resin was obtained.

An ink-jet recording paper was prepared using the agent for improving water resistance of ink-jet recording paper prepared above and the water resistance and the property to prevent blotting with ink of the paper were evaluated. No flowing with water or blotting was found in the portions printed in single colors of black, cyan, magenta and yellow. No blotting was found in the portion of dots printed in a single color of black.

### Example 16

An aqueous solution of an agent for improving water resistance of ink-jet recording paper containing 25% by weight of a cationic polyurethane resin was obtained in accordance with the same procedures as those conducted in Example 15 except that an aqueous amine solution which was prepared in advance by partially neutralizing 35 parts by weight of tri(2-aminoethyl)amine with 28.8 parts by weight of a 99% by weight acetic acid was added in place of the aqueous amine solution which was prepared in advance by partially neutralizing 27.1 parts by weight of methyliminobispropylamine with 14.4 parts by weight of a 99% by weight acetic acid and 618.0 parts by weight of water was added.

An ink-jet recording paper was prepared using the agent for improving water resistance of ink-jet recording paper prepared above and the water resistance and the property to prevent blotting with ink of the paper were evaluated. No flowing with-water or blotting was found in the portions printed in single colors of black, cyan, magenta and yellow. No blotting was found in the portion of dots printed in a single color of black.

### Example 17

An aqueous solution of an agent for improving water resistance of ink-jet recording paper containing 25% by weight of a cationic polyurethane resin was obtained in accordance with the same procedures as those conducted in Example 15 except that an aqueous amine solution which was prepared in advance by partially neutralizing 24.7 parts by weight of diethylenetriamine with 28.8 parts by weight of a 99% by weight acetic acid was added in place of the aqueous amine solution which was prepared in advance by partially neutralizing 27.1 parts by weight of methyliminobispropylamine with 14.4 parts by weight of a 99% by weight acetic acid and 586.3 parts by weight of water was added.

An ink-jet recording paper was prepared using the agent for improving water resistance of ink-jet recording paper prepared above and the water resistance and the property to prevent blotting with ink of the paper were evaluated. No flowing with water or blotting was found in the portions printed in single colors of black, cyan, magenta and yellow. No blotting was found in the portion of dots printed in a single color of black.

### Comparative Example 1

Into a four-necked flask purged with nitrogen, 20 parts by weight of N,N-dimethylformamide and 67.2 parts by weight of hexamethylene diisocyanate were plated. The mixture was cooled to 30°C or lower and 119 parts by weight of N-methyldiethanolamine was added. The reaction was allowed to proceed in the resultant mixture at 70°C for 1 hour. After the reaction was completed and the reaction mixture was cooled, 664.8 parts by weight of water and 60 parts by weight of acetic acid were added and an aqueous solution of an agent for improving water resistance of ink-jet recording paper containing 20% by weight of a cationic polyurethane resin was obtained.

An ink-jet recording paper was prepared using the agent for improving water resistance of ink-jet recording paper prepared above and the water resistance and the property to prevent blotting with ink of the paper were evaluated. Flowing with water and blotting were apparently found in the portions printed in single colors of black, cyan, magenta and yellow. Blotting was found in the portion of dots printed in a single color of black.

### Comparative Example 2

Into a four-necked flask purged with nitrogen, 20 parts by weight of N,N-dimethylformamide and 100.8 parts by weight of hexamethylene diisocyanate were placed. The mixture was cooled to 30°C or lower and 21.5 parts by weight of N-methyldiethanolamine was added. The reaction was allowed to proceed in the resultant mixture at 70°C for 1 hour. Then, 74.8 parts by weight of 2-dimethylaminoethanol was added and the reaction was allowed to proceed at 70°C for 1 hour. After the reaction was completed, 707.2 parts by weight of water and 61.2 parts by weight of acetic acid were added and an aqueous solution of an agent for improving water resistance of ink-jet recording paper containing 20% by weight of a cationic polyurethane resin was obtained.

An ink-jet recording paper was prepared using the agent for improving water resistance of ink-jet recording paper prepared above and the water resistance and the property to prevent blotting with ink of the paper were evaluated. Flowing with water and blotting were apparently found in the portions printed in single colors of black, cyan, magenta and yellow. Blotting was found in the portion of dots printed in a single color of black.

### Comparative Example 3

An ink-jet recording paper was prepared using polyethyleneimine (the average molecular weight: 1,200) in place of a cationic polyurethane resin and the water resistance and the property to prevent blotting with ink were evaluated. Some blotting was found in the portions printed in single colors of black and magenta. Flowing with water and blotting were apparently found in the portions printed in single colors of cyan and yellow. Blotting was found in the portion of dots printed in a single color of black.

The compositions of the materials and the results of evaluation of the water resistance and the property to prevent blotting with ink in Examples 1 to 17 and Comparative Examples 1 to 3 are shown in Tables 1-1, 1-2 and 1-3.

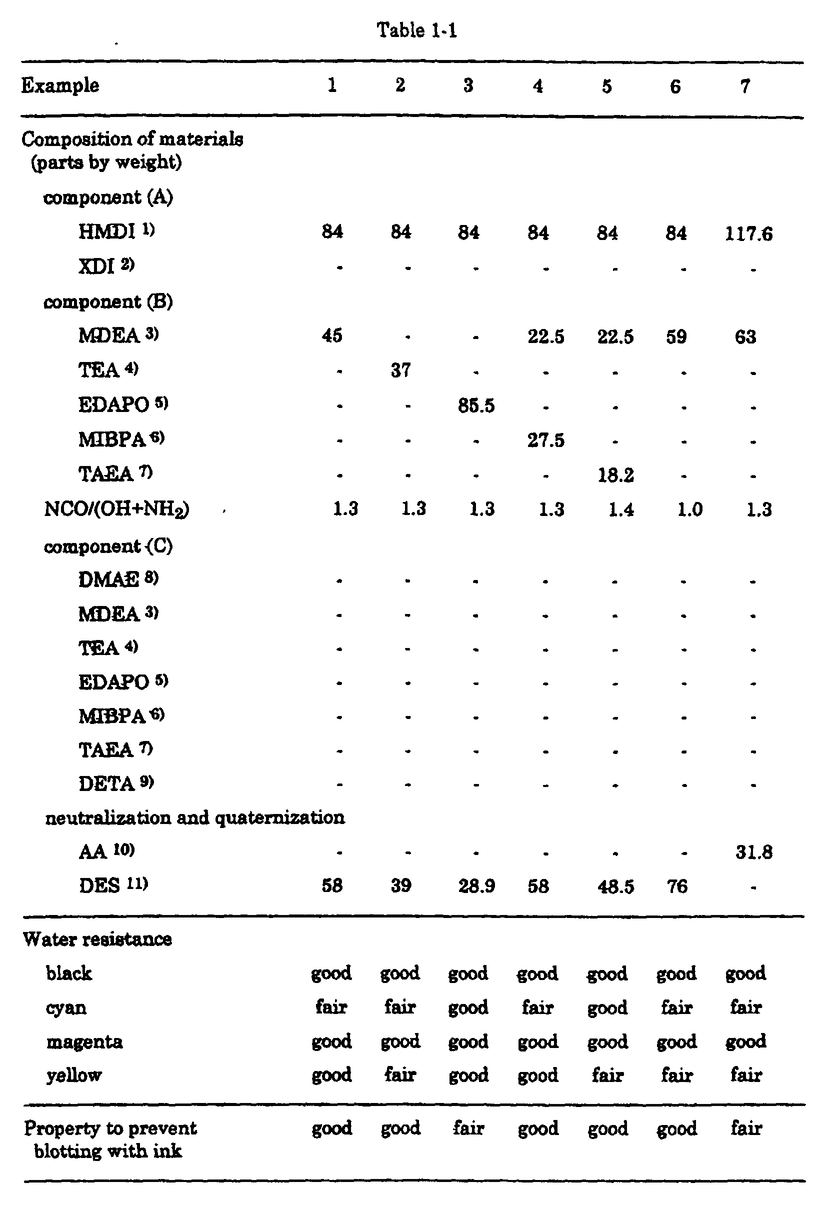

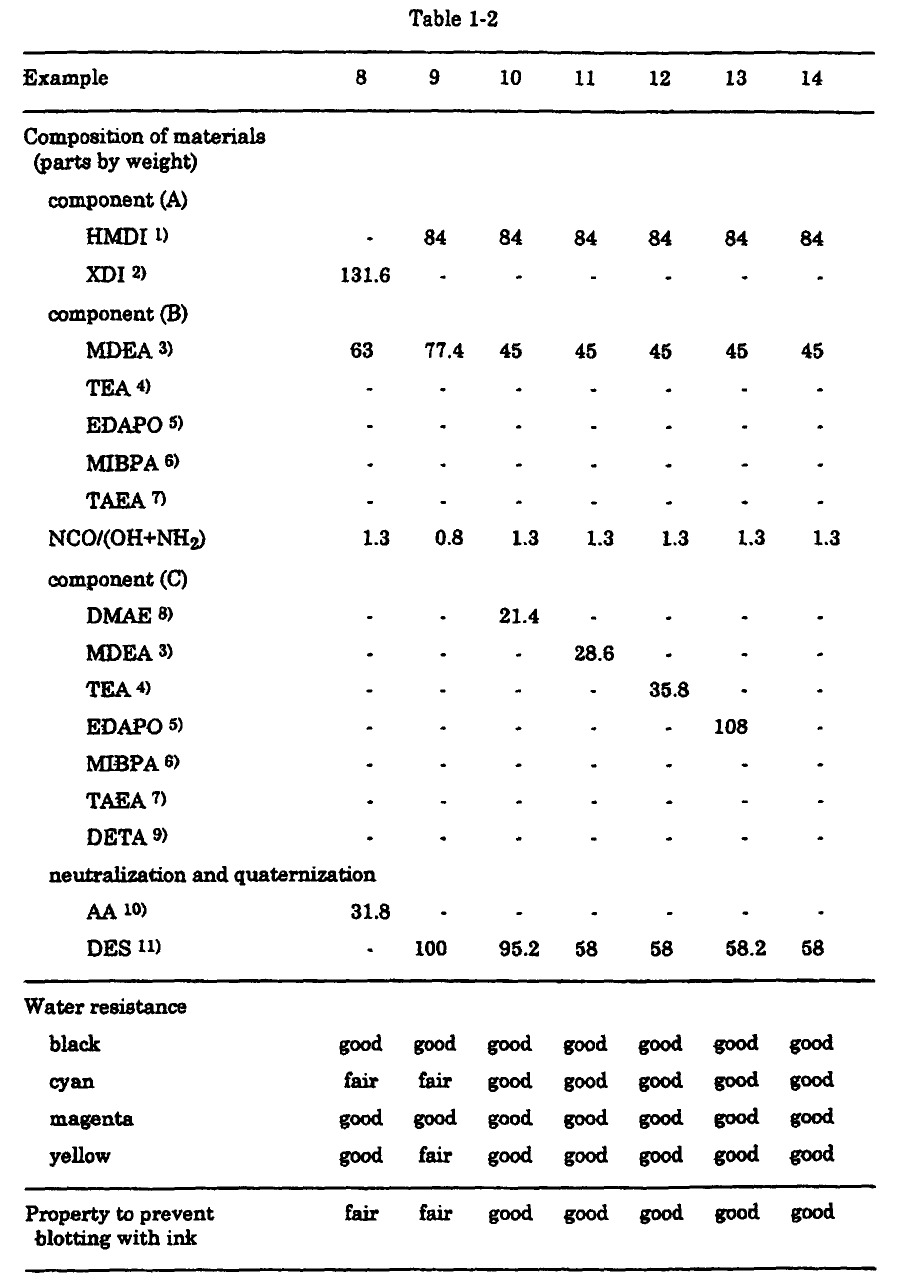

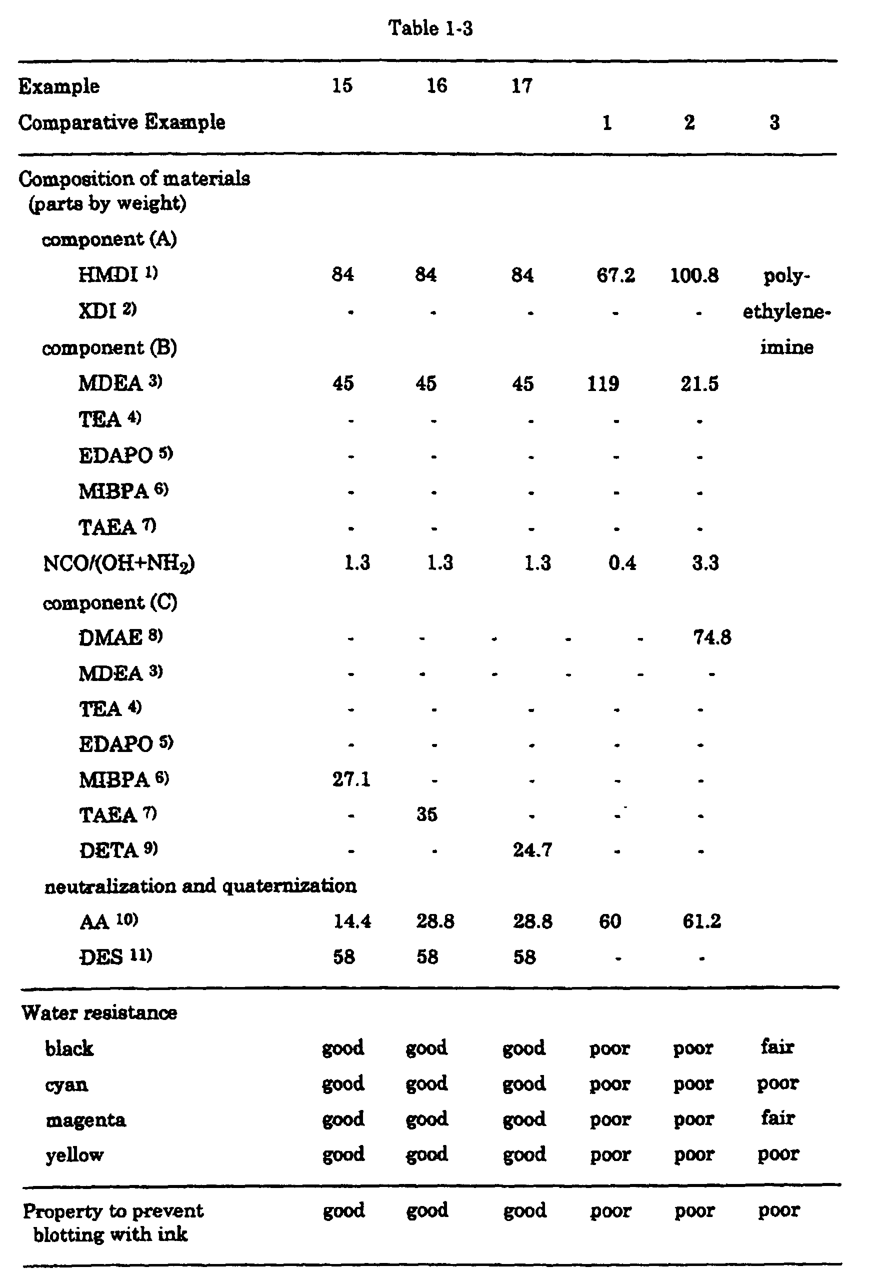

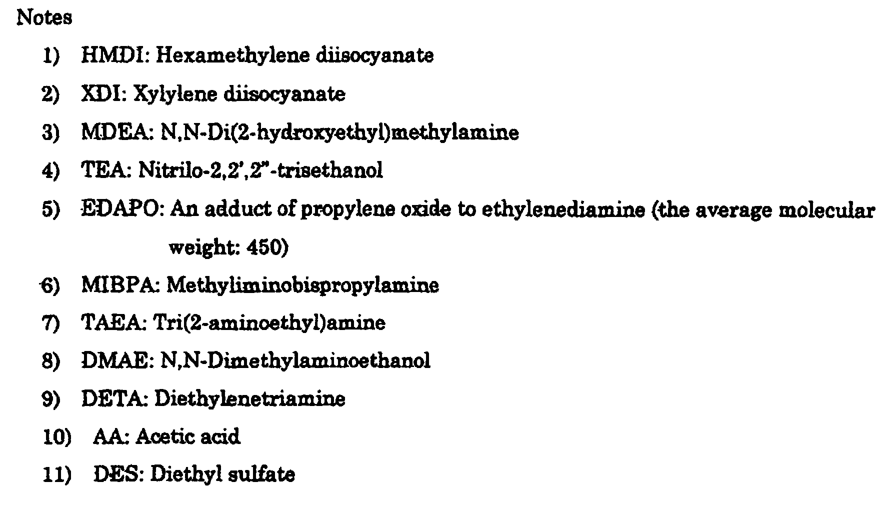

As shown by the results in Tables 1-1, 1-2 and 1-3, the ink-jet recording papers in Examples 1 to 17 which were prepared by coating a recording paper with the agent for improving water resistance of ink-jet recording paper of the present invention exhibited the excellent water resistance with respect to all types of ink and the excellent property to prevent blotting with ink. In contrast, in Comparative Example 1 in which the ratio by equivalent of isocyanate group in component (A) to hydroxyl group in component (B) was 0.4, in Comparative Example 2 in which the above ratio is 3.3 and in Comparative Example 3 in which a conventional agent for improving water resistance of ink-jet recording paper (i.e., polyethyleneimine) was used for preparation of the ink-jet recording paper, the prepared ink-jet recording papers exhibited inferior water resistances and inferior properties to prevent blotting with ink.

### INDUSTRIAL APPLICABILITY

By coating ink-jet recording paper with the agent for improving water resistance of ink-jet recording paper of the present invention, water resistance of images and characters recorded by using ink-jet printers can be improved and images of an excellent quality can be recorded without blotting with ink.

## Claims

1. An agent for improving water resistance of ink-jet recording paper which comprises a cationic polyurethane resin obtained by neutralizing amine structures or quaternizing a tertiary amine structure in molecules of a polyurethane which is obtained by reacting component (A) (an organic isocyanate compound having 2 or more isocyanate groups) with component (B) (a tertiary amine compound having 2 to 10 groups each selected from hydroxyl group and amino group) in amounts such that a ratio by equivalent of the isocyanate group to a total of the hydroxyl group and the amino group is 0.5 to 3.0.

2. An agent for improving water resistance of ink-jet recording paper which comprises a cationic polyurethane resin obtained by neutralizing amine structures or quaternizing a tertiary amine structure in molecules of a polyurethane which is obtained by reacting component (A) (an organic isocyanate compound having 2 or more isocyanate groups) with component (B) (a tertiary amine compound having 2 to 10 groups each selected from hydroxyl group and amino group) in amounts such that a ratio by equivalent of the isocyanate group to a total of the hydroxyl group and the amino group exceeds 1.0 and is smaller than 3.0, and then reacting component (C) (an amine compound having 1 to 4 groups each selected from hydroxyl group and amino group) with isocyanate group in molecules of a polyurethane obtained by reacting component (A) with component (B).

3. An agent for improving water resistance of ink-jet recording paper according to any of Claims 1 and 2, wherein the cationic polyurethane resin is obtained by neutralizing amine structures or quaternizing a tertiary amine structure in molecules of the polyurethane, and then converting unreacted isocyanate group in a product of the neutralization or the quaternization into amino group by reaction with water.

4. An ink-jet recording paper which is coated with an agent for improving water resistance of ink-jet recording paper described in any of Claims 1 to 3.
